# EUROPÄISCHE PATENTSCHRIFT

(11) **EP 2 294 492 B1**
(45) Veröffentlichungstag und Bekanntmachung des Hinweises auf die Patenterteilung: **10.07.2013**
(21) Anmeldenummer: 09757200.2
(22) Anmeldetag: 26.05.2009
(51) Int. Cl.: B29C 45/73, G05D 23/19

(54) **TEMPERIERGERÄT MIT DURCHFLUSSMESSUNG**
TEMPERATURE DEVICE HAVING FLOW MEASUREMENT
APPAREIL DE RÉGULATION DE TEMPÉRATURE À MESURE DU DÉBIT

(30) Priorität: 06.06.2008 DE 102008027039
(43) Veröffentlichungstag der Anmeldung: 16.03.2011
(73) Patentinhaber: Aic-Regloplas Gmbh, 81829 München (DE)
(72) Erfinder: STEIN, Roland, 82041 Deisenhofen (DE); PILSL, Josef, 85716 Unterschleissheim (DE)
(74) Vertreter: Grünecker, Kinkeldey, Stockmair & Schwanhäusser
(86) Internationale Anmeldenummer: PCT/EP2009/003739
(87) Internationale Veröffentlichungsnummer: WO 2009/146817

(56) Entgegenhaltungen:
- EP-A2- 1 563 975
- US-A- 3 578 066
- US-A1- 2006 196 957

## Beschreibung

Die vorliegende Erfindung betrifft ein Temperiergerät mit einer Pumpe zur Förderung eines Temperiermediums, einer der Pumpe nachgeordneten Druckmesseinrichtung, einer der Druckmesseinrichtung nachgeordneten Absperreinrichtung und einer Steuer- und Auswerteeinheit.

Solche Temperiergeräte werden beispielsweise eingesetzt, um Spritzgießformen, Druckgießformen, Extruder, Kneter, Walzen und Behälter zu temperieren. Dazu wird das Temperiergerät über geeignete Leitungen, die sogenannten Vorlaufleitungen, z.B. Rohrleitungen oder Schläuche, mit Temperierkanälen in der jeweiligen Vorrichtung, d.h. in den Spritz-oder Druckgießformen, Extrudern, Knetern, Walzen, Behältern oder Ähnlichem, verbunden. Mittels der Pumpe des Temperiergeräts wird das Temperiermedium im Kreislauf von dem Temperiergerät durch die Vorlaufleitungen, die Temperierkanäle der Vorrichtung und durch sogenannte Rücklaufleitungen zurück zum Temperiergerät gepumpt. Dabei muss sichergestellt werden, dass die zu temperierende Vorrichtung die gewünschte Temperatur hat. Üblicherweise wird dazu nicht die Temperatur in der Vorrichtung, also z.B. der Spritzgießform, bestimmt, sondern die Vorlauftemperatur, d.h. die Temperatur des Temperiermediums am Austritt aus dem Temperiergerät. Entsprechen Vorlauftemperatur und Durchflussmenge des Temperiermediums vorgegebenen Werten, so ist sichergestellt, dass auch Wärme vom/zum Verbraucher übertragen wird. Es ist bereits bekannt, dass zur Durchflussmessung in Temperiergeräten Durchflussmessgeräte verschiedenster Ausführung eingesetzt werden. Nachteilig ist dabei, dass diese Durchflussmessgeräte meist aus mechanischen und damit bewegten Komponenten bestehen und daher Verschleiß unterworfen sind. Beispiele hierfür sind Flügelrad- oder Turbinendurchflussmesser. Andere Durchflussmessgeräte, z.B. Ultraschall- oder magnetisch-induktive Durchflussmesser sind zwar verschleißfrei, dafür aber sehr teuer und empfindlich gegen Luft- und Dampfblasen.

Ferner ist aus der DE 92 03 032 U1 ein Temperiergerät bekannt, bei dem in den Kreislauf des Temperiermediums ein Druckaufnehmer oder Manometer geschaltet ist. Dadurch ist es möglich, Veränderungen der Durchflussmenge des Umlaufmediums stetig zu kontrollieren. Änderung der Durchflussmengen können auf schadhafte Pumpen oder Undichtigkeit hinweisen.

Aufgabe der vorliegenden Erfindung ist es, ein Temperiergerät bereitzustellen, das eine verschleißfreie und kostengünstige Durchflussmessung ermöglicht, die zeitnah die Werte der Durchflussmessung bereitstellt. Dabei soll es auch möglich sein, Änderungen, z.B. durch Verschleiß, im System des Temperiergeräts zu berücksichtigen.

Hierzu ist erfindungsgemäß vorgesehen, dass in der Steuer- und Auswerteeinheit eine Pumpenkennlinie der Pumpe des Temperiergeräts hinterlegt ist, die eine Beziehung zwischen einem Pumpendruck des Temperiergeräts und einer Durchflussmenge des Temperiermediums wiedergibt, und dass die Steuer- und Auswerteeinheit derart ausgebildet ist, dass die Pumpenkennlinie kalibrierbar ist.

Mit dem Begriff Pumpendruck wird hier der mittels der Pumpe im Temperiermedium aufgebaute Druck bezeichnet. Wenn das Temperiergerät nicht unter Druck steht, sondern in dem Bereich vor der Pumpe des Temperiergeräts atmosphärischer Druck herrscht, so entspricht der mittels der der Pumpe nachgeordneten Druckmesseinrichtung ermittelte Druck im Vorlauf, der Vorlaufdruck, dem Pumpendruck. Durch die Hinterlegung der Pumpenkennlinie ist eine sehr einfache Ermittlung der Durchflussmenge der Temperiermediums möglich. Aus dem mittels der Druckmesseinrichtung gemessenen Vorlaufdruck wird der Pumpendruck ermittelt, in der Steuer- und Auswerteeinheit mit der Pumpenkennlinie verglichen und so die korrespondierende Druckmessmenge ermittelt. Da keine zusätzlichen Durchflussmessgeräte notwendig sind, ist die Durchflussmessung sehr preisgünstig. Zudem ist die Druckmesseinrichtung im Gegensatz zu mechanischen Durchflussmessgeräten praktisch verschleißfrei. Es ist bekannt, dass an der Pumpe des Temperiergerätes nach längerem Betrieb Verschleiß auftreten kann. Die Pumpe kann dann nicht mehr die ursprüngliche Durchflussmenge fördern. Es würde daher bei einer festen Beziehung zwischen Pumpendruck und Durchflussmenge ein zu hoher Durchfluss ermittelt. Durch die Kalibrierung kann die Pumpenkennlinie an den Verschleiß der Pumpe angepasst und somit der richtige Durchfluss angezeigt werden.

In einer Weiterbildung kann vorgesehen werden, dass das Temperiergerät ferner eine zweite, der Pumpe vorgeschaltete Druckmesseinrichtung zur Bestimmung eines Systemdrucks umfasst.

Systemdruck bezeichnet hier den Druck im Temperiergerät vor der Pumpe. Diese Weiterbildung der Erfindung ist insbesondere bei sogenannten Druckwassergeräten vorteilhaft. Druckwassergeräte sind Temperiergeräte, bei welchen Wasser als Temperiermedium eingesetzt wird und Temperaturen von bis zu 180°C eingestellt werden können. Um mit Wasser als Temperiermedium eine Temperatur von über 100°C zu erreichen, also das Verdampfen des Wassers zu vermeiden, muss das gesamte Temperiersystem unter Druck, dem sogenannten Systemdruck, stehen (Prinzip Schnellkochtopf). Der Pumpendruck, also der durch die Pumpe erzeugte Druck, der in der Steuer- und Auswerteeinheit mit der hinterlegten Pumpenkennlinie verglichen wird, ergibt sich bei diesen Geräten aus der Differenz des mit des ersten Druckmesseinrichtung bestimmten Vorlaufrucks nach der Pumpe und des mit der zweiten Druckmesseinreichung bestimmten Systemdrucks vor der Pumpe.

In einer bevorzugten Ausführungsform kann vorgesehen werden, dass die Steuer- und Auswerteeinheit derart ausgebildet ist, dass sie bei der Kalibrierung der Pumpenkennlinie ein Schließen der Absperreinrichtung bewirkt, so dass ein maximaler Pumpendruck ermittelbar ist, der den Nullpunkt der Pumpenkennlinie festlegt. Durch diese Ausbildung der Steuer- und Auswerteeinheit ist eine sehr einfache Kalibrierung der Pumpenkennlinie möglich, indem ein Punkt der neuen Pumpenkennlinie ermittelt und die Pumpenkennlinie durch Parallelverschiebung in diesen Wert verschoben wird.

Vorzugsweise kann die Steuer- und Auswerteeinheit derart ausgebildet sein, dass sie einen Alarm ausgibt, wenn der maximale Pumpendruck einen festgelegten Grenzwert unterschreitet. Dadurch wird eine Pumpenfehlfunktion registriert und der Betreiber darauf aufmerksam gemacht, dass die Pumpe nur noch eine reduzierte Leistung erbringt und eventuell ausgetauscht bzw. gewartet werden muss.

Eine weitere Variante sieht vor, dass das Temperiergerät eine Temperaturmesseinrichtung aufweist und die Steuer- und Auswerteeinheit derart ausgebildet ist, dass die Pumpenkennlinie an die gemessenen Temperaturwerte anpassbar ist. Dadurch werden temperaturbedingte Dichteschwankungen im Temperiermedium berücksichtigt, Fehler bei der Berechnung der Durchflussmenge werden reduziert.

Noch eine weitere Ausgestaltung sieht vor, dass ein Magnetventil als Absperreinrichtung eingesetzt ist. Die Absperreinrichtung ist dadurch sehr einfach ausgebildet, das Öffnen und Schließen der Absperreinrichtung, d.h. das Ansteuern, kann einfach über die Steuer- und Auswerteeinheit gesteuert werden.

Um eine platzsparende Ausgestaltung zu ermöglichen, kann vorgesehen werden, dass die Temperaturmesseinrichtung in die Druckmesseinrichtung integriert ist. Diese Lösung ist zudem sehr kostengünstig.

In noch einer weiteren Ausbildung kann vorgesehen werden, dass das Temperiergerät einen Befüllanschluss zum Befüllen mit Temperiermedium und einen Ablassanschluss zum Ablassen von Temperiermedium aufweist, und dass die Steuer- und Auswerteeinheit derart ausgebildet ist, dass der Systemdruck vor der Pumpe des Temperiergeräts durch Ansteuern des Befüllanschlusses oder des Ablassanschlusses einstellbar ist. Dadurch kann der Systemdruck im Temperiergerät eingestellt werden. Ist der Systemdruck zu niedrig, so gibt die Steuer- und Auswerteeinheit einen Öffnungsbefehl an den Befüllanschluss und es wird zusätzliches Temperiermedium in das Temperiergerät gefüllt, bis der gewünschte Systemdruck erreicht ist. Ist der Systemdruck zu hoch, so gibt die Steuer- und Auswerteeinheit einen Öffnungsbefehl an den Ablassanschluss und es wird Temperiermedium aus dem Temperiergerät abgelassen, bis der gewünschte Systemdruck eingestellt ist. So kann zum Einen vermieden werden, dass in dem System ein Überdruck entsteht, Bauteile mehr als nötig belastet werden und ein Sicherheitsventil auslöst. Dies ist vor allem dann nachteilig, wenn das Sicherheitsventil in einen bereits vorgegebenen Ablauf mündet, der nicht temperaturbeständig ist oder an dem ebenfalls Druck anliegt. Zum Anderen kann dadurch vermieden werden, dass der Systemdruck zu weit abfällt, so dass Kavitation auftritt. Dies ist vor allem bei Druckwassergeräten, bei denen als Temperiermedium Wasser eingesetzt wird und die bei Temperaturen bis 180°C betrieben werden, vorteilhaft. Um zu verhindern, dass das Wasser verdampft, wenn es auf über 100°C erhitzt wird, muss ein bestimmter Systemdruck vorliegen. Bei höheren Temperaturen muss der Systemdruck auch entsprechend höher sein, da es andernfalls zu Verdampfung kommt. Die Verdampfung würde zu Dampfblasenbildung und eventuell zu sogenannten Wasserschlägen, bzw. Kavitation führen, die erhebliche Schäden im gesamten Temperierkreis führen kann. Durch die Einstellung des Systemdrucks auf einen festgelegten Sollwert kann dies vermieden werden.

Vorzugsweise ist dazu in der Steuer- und Auswerteeinheit ferner eine zweite Kennlinie für das jeweilige Temperiermedium hinterlegt, aus der ein Systemdruck-Sollwert anhand der mittels der Temperaturmesseinrichtung gemessenen Systemtemperatur bestimmbar ist. Vor allem bei Druckwassergeräten ist diese Kennlinie vorzugsweise die Dampfdruckkurve des entsprechenden Temperiermediums. Der gewünschte Systemdruck liegt dann immer etwas über dem Sättigungsdampfdruck, so dass ein Verdampfen des Temperiermediums vermieden wird.

Darüber hinaus bezieht sich die Erfindung auch auf ein Verfahren zum Bestimmen der Durchflussmenge eines Temperiermediums in einem oben beschriebenen Temperiergerät. Bei dem Verfahren wird der Vorlaufdruck des Temperiermediums nach der Pumpe gemessen, aus dem gemessenen Vorlaufdruck der Pumpendruck ermittelt, der Pumpendruck mit der in der Steuer- und Auswerteeinheit des Temperiergeräts hinterlegten Pumpenkennlinie, die die Beziehung zwischen dem Pumpendruck des Temperiergeräts und einer Durchflussmenge des Temperiermediums wiedergibt, verglichen und die korrespondierende Durchflussmenge ermittelt, wobei die Pumpenkennlinie zumindest einmal kalibriert wird.

Mit diesem Verfahren ist eine sehr einfache Bestimmung der Durchflussmenge des Temperiermediums in dem Temperiergerät mit den üblichen Bauteilen eines Temperiergeräts möglich. Durch die Kalibrierungsmöglichkeit der Pumpenkennlinie ist eine Anpassung an Änderungen im System, beispielsweise an einen Verschleiß der Pumpe, möglich. Wie bereits beschrieben, ist der Pumpendruck der Druck im Temperiermedium stromabwärts von der Pumpe, also der durch die Pumpe aufgebaute Druck.

Vorzugsweise kann vorgesehen werden, dass die Absperreinrichtung des Temperiergeräts zum Kalibrieren kurzzeitig geschlossen, ein maximaler Pumpendruck ermittelt und die in der Auswerteeinheit hinterlegte Pumpenkennlinie an den maximalen Pumpendruck angepasst wird. Auf diese Weise kann über Ermittlung eines einzigen Messpunkts eine Kalibrierung der Pumpenkennlinie erfolgen.

Eine sehr einfache Anpassung der Pumpenkennlinie wird dadurch ermöglicht, dass der maximale Pumpendruck den Nullpunkt der Pumpenkennlinie festlegt und die Pumpenkennlinie bei einer Änderung des maximalen Pumpendrucks durch Parallelverschiebung in den neuen Nullpunkt verschoben wird.

Es kann auch vorgesehen sein, dass zusätzlich der Systemdruck des Temperiermediums vor der Pumpe ermittelt wird und ein Differenzdruck aus den Messwerten für den Vorlaufdruck des Temperiermediums nach der Pumpe und dem Systemdruck des Temperiermediums vor der Pumpe ermittelt wird, wobei dieser Differenzdruck dem Pumpendruck entspricht, mit der in der Steuer- und Auswerteeinheit hinterlegten Pumpenkennlinie verglichen und die korrespondierende Durchflussmenge ermittelt wird. Dies ist vor allem bei sogenannten Druckwassergeräten vorteilhaft, bei denen der gesamte Temperierkreis unter Druck steht, um ein Verdampfen des als Temperiermediums eingesetzten Wassers zu verhindern.

In einer weiteren vorteilhaften Variante des Verfahrens kann vorgesehen werden, dass das Temperiergerät einen Alarm ausgibt, wenn der maximale Pumpendruck einen Grenzwert unterschreitet. Vorzugsweise wird der Alarm von der Steuer- und Auswerteeinheit ausgegeben. Der Betreiber wird dadurch auf Änderungen im System, beispielsweise auf einen Pumpenverschleiß, hingewiesen, so dass ein rechtzeitiger Austausch oder eine rechtzeitige Wartung von Systemkomponenten, beispielsweise der Pumpe, ermöglicht wird.

Vorzugsweise werden die maximalen Pumpendrücke gespeichert. Dadurch ist eine Überwachung bzw. Kontrolle der Pumpe des Temperiergeräts möglich und der fortschreitende Verschleiß der Pumpe wird kontrolliert.

Noch eine weitere Variante des Verfahrens sieht vor, dass das Kalibrieren der Pumpenkennlinie in zyklischen Abständen erfolgt. Dadurch wird eine regelmäßige Korrektur der Pumpenkennlinie ermöglicht, Änderungen im System, wie der Pumpenverschleiß, können berücksichtigt werden. Auch im Dauerbetrieb kann so eine regelmäßige Verschleißkontrolle durchgeführt werden. Es kann auch vorgesehen werden, die Kalibrierung dann durchzuführen, wenn rasche Druckveränderungen im Temperiersystem gemessen werden. Diese Än-derungen können auf einen Schaden der Pumpe hinweisen.

In einer besonders einfachen Verfahrensvariante kann vorgesehen werden, dass der Kalibrierungsvorgang bei jedem Einschalten des Temperiergeräts durchgeführt wird.

Zweckmäßigerweise kann vorgesehen werden, dass die Temperatur des Temperiermediums gemessen und die Pumpenkennlinie an die gemessene Temperatur angepasst wird. Dadurch können Dichteänderungen im Temperiermedium, die bei Temperaturschwankungen auftreten, berücksichtigt werden.

Es kann ferner auch vorgesehen werden, dass der Systemdruck mit einem Sollwert verglichen wird und die Steuer- und Auswerteeinheit den Befüllanschluss oder den Ablassanschluss bei Abweichungen des Systemdrucks von dem Sollwert öffnet. Dadurch wird zum Einen vermieden, dass in dem System ein Überdruck entsteht und Undichtigkeiten auftreten oder ein Sicherheitsventil anspricht. Zum Anderen kann vermieden werden, dass der Systemdruck zu weit abfällt, was beispielsweise zu Kavitation und zu einer Beschädigung der Pumpe führen könnte. Dies ist vor allem bei Druckwassergeräten wichtig.

Vorzugsweise ist in der Steuer- und Auswerteeinheit die Dampfdruckkurve des jeweiligen Temperiermediums hinterlegt und der Systemdruck-Sollwert wird anhand der gemessenen Systemtemperatur aus der Dampfdruckkurve ermittelt. Dadurch kann vermieden werden, dass der Systemdruck unter den Sättigungsdampfdruck für das entsprechende Temperiermedium fällt und dass das Temperaturmedium zu sieden beginnt und verdampft.

Im Folgenden werden Ausführungsformen der Erfindung anhand einer Zeichnung näher erläutert. Es zeigen:
- Fig. 1: schematische Darstellung eines Temperiergeräts,
- Fig. 2: Darstellung einer Pumpenkennlinie eines neuen Temperiergeräts und einer Pumpenkennlinie des selben Temperiergeräts nach längerem Gebrauch und
- Fig. 3: Darstellung einer Dampfdruckkurve für ein Temperiermedium.

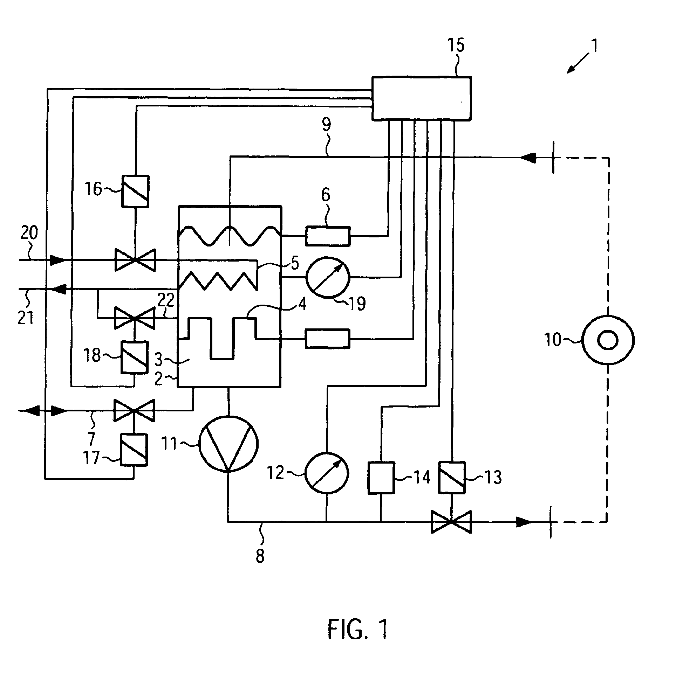

Fig. 1 zeigt eine schematische Darstellung eines Temperiergeräts 1. Das Temperiergerät 1 umfasst einen Behälter 2 für ein Temperiermedium 3. Als Temperiermedium 3 kann beispielsweise Wasser oder ein Wärmeträgeröl eingesetzt werden. In dem Behälter 2 ist eine Heizeinrichtung 4 zum Beheizen des Temperiermediums 3 vorgesehen. Ferner kann in dem Behälter 2 auch eine Kühleinrichtung 5 angeordnet sein. Die Kühleinrichtung 5 weist einen Kühlmittelzulauf 20, der mit einem Absperrventil 16 geöffnet oder geschlossen werden kann, und einen Kühlmittelablauf 21 auf. Durch Heizen mit der Heizeinrichtung 4 und Kühlen mit der Kühleinrichtung 5 wird das Temperiermedium 3 auf die gewünschte Temperatur gebracht. Der Behälter 2 weist auch eine Niveaukontrolle 6 auf, mit der der Flüssigkeitsstand des Temperiermediums 3 in dem Behälter 2 kontrolliert werden kann. Zudem ist an dem Behälter 2 ein Befüllanschluss 7, über den Temperiermedium 3 in den Behälter 2 eingefüllt werden kann, und ein Ablassanschluss 22, durch den Temperiermedium aus dem Behälter 2 abgelassen werden kann, vorgesehen. Dazu ist der Befüllanschluss 7 mit einem Befüllventil 17 und der Ablassanschluss 22 mit einem Ablassventil 18 versehen. Der Ablassanschluss 22 mündet vorzugsweise in den Kühlmittelablauf 21.

Der Behälter 2 ist mit einer Vorlaufleitung 8 und einer Rücklaufleitung 9 mit einem Verbraucher 10, beispielsweise einer Spritz- oder Druckgießform, einem Extruder, einer Walze, einem Behälter oder Ähnlichem verbunden. Um das Temperiermedium 3 im Kreislauf aus dem Behälter 2 zu dem Verbraucher 10 und zurück zu dem Behälter 2 zu fördern, ist eine Pumpe 11 vorgesehen. Die Pumpe 11 kann beispielsweise in der Vorlaufleitung 8 angeordnet sein. Der Pumpe 11 ist eine erste Druckmesseinrichtung 12 und eine Absperreinrichtung 13 nachgeordnet. Die erste Druckmesseinrichtung 12 befindet sich also stromabwärts der Pumpe 11, die Absperreinrichtung 13 ist dabei vorzugsweise in Strömungsrichtung hinter der ersten Druckmesseinrichtung 12 angeordnet. Die erste Druckmesseinrichtung 12 misst also den Druck stromabwärts der Pumpe 11, den sogenannten Vorlaufdruck. Als Absperreinrichtung 13 kann beispielsweise ein Magnetventil eingesetzt werden. Es sind aber auch andere Absperreinrichtungen denkbar, beispielsweise ein mechanisches Ventil.

In dem Kreislauf für das Temperiermedium 3, vorzugsweise in der Vorlaufleitung 8, ist ferner auch eine Temperaturmesseinrichtung 14 angeordnet. Als Temperaturmesseinrichtung 14 kann ein Temperaturfühler eingesetzt werden. Es ist aber auch möglich, dass die Temperaturmesseinrichtung 14 in die Druckmesseinrichtung 12 integriert ist und die Druckmesseinrichtung 12 als Drucksensor mit integriertem Temperaturausgang ausgebildet ist.

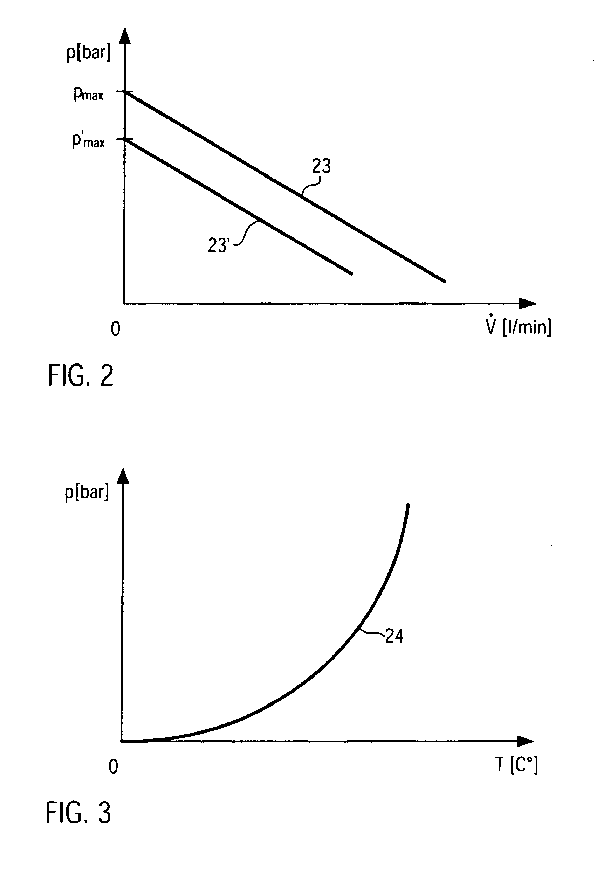

Das Temperiergerät 1 umfasst ferner eine Steuer- und Auswerteeinheit 15, die mit der ersten Druckmesseinrichtung 12, der Absperreinrichtung 13, der Temperaturmesseinrichtung 14, der Heizeinrichtung 4 und der Kühleinrichtung 5, der Niveaukontrolle 6, dem Befüllventil 17 und dem Ablassventil 18 verbunden ist. Die erste Druckmesseinrichtung 12 und die Temperaturmesseinrichtung 14 liefern Signale, d.h. Druckmesswerte für den Vorlaufdruck und Temperaturmesswerte, an die Steuer- und Auswerteeinheit 15. In der Steuer- und Auswerteeinheit 15 ist eine Pumpenkennlinie des Temperiergeräts 1 hinterlegt, die die Beziehung zwischen dem durch die Pumpe 11 aufgebauten Pumpendruck des Temperiergeräts 1 und der Durchflussmenge des durch die Pumpe 11 geförderten Temperiermediums 3 wiedergibt. Beispiele von Pumpenkennlinien 23, 23' sind in Fig. 2 dargestellt.

Die Steuer- und Auswerteeinheit 15 ist derart ausgebildet, dass eine Ermittlung der Durchflussmenge des Temperiermediums 3, das durch die Pumpe 11 gefördert wird, anhand des durch die erste Druckmesseinrichtung 12 gemessenen Vorlaufdrucks möglich ist. Herrscht vor der Pumpe 11 des Temperiergeräts atmosphärischer Druck, so entspricht der mit der ersten Druckmesseinrichtung gemessene Vorlaufdruck dem Pumpendruck. Die Steuer- und Auswerteeinheit 15 ist dann also so ausgebildet, dass der Vorlaufdruck mit der Pumpenkennlinie 23, 23' verglichen und so die entsprechende Durchflussmenge ermittelt wird. Ferner ist die Steuer- und Auswerteeinheit 15 derart ausgebildet, dass die Pumpenkennlinie 23, 23' kalibrierbar ist.

Die Steuer- und Auswerteeinheit 15 liefert Öffnungs- und Schließbefehle an die Absperreinrichtung 13, Heizbefehle an die Heizeinrichtung 4 und Öffnungs- und Schließbefehle an das Befüllventil 17 und das Ablassventil 18 unter Berücksichtigung der Niveaukontrolle 6. Ferner ist die Steuer- und Auswerteeinheit 15 auch mit einem Absperrventil 16 in der Kühleinrichtung 5 verbunden und liefert Öffnungs- bzw. Schließbefehle an dieses Absperrventil 16, um ein Kühlen des Temperiermediums 3 zu ermöglichen.

Wie bereits beschrieben, ist die Steuer- und Auswerteeinheit 15 derart ausgebildet, dass sie eine Kalibrierung der Pumpenkennlinie 23, 23' ermöglicht. Dazu ist die Steuer- und Auswerteeinheit 15 so ausgebildet, dass sie bei der Kalibrierung der Pumpenkennlinie 23, 23' ein Schließen der Absperreinrichtung 13 bewirkt. Die Pumpe 11 des Temperiergerät 1 fördert nun gegen eine geschlossene Leitung, so dass über die Druckmesseinrichtung 12 ein maximaler Pumpendruck p'ₘₐₓ ermittelt wird. Dieser Wert p'ₘₐₓ wird mit dem Maximalwert pₘₐₓ der in der Steuer- und Auswerteeinheit hinterlegten Pumpenkennlinie 23 verglichen. Sind beide Werte identisch, so wird der Durchfluss im anschließenden Betrieb des Temperiergeräts 1 anhand der ursprünglichen Pumpenkennlinie 23 ermittelt. Bei geringerem maximalen Pumpendruck p'ₘₐₓ wird die ursprüngliche Pumpenkennlinie 23 nach unten verschoben, so dass ihr Nullpunkt durch den Wert p'ₘₐₓ verläuft und die Pumpenkennlinie auf der Kennlinie 23' liegt. Damit wird eine Abweichung der Pumpenkennlinien 23, 23', wie sie beispielsweise durch Verschleiß der Pumpe 11 hervorgerufen werden kann, korrigiert.

Um die Auswirkungen von Temperaturschwankungen zu berücksichtigen, ist die Steuer-und Auswerteeinheit 15 derart ausgebildet, dass die Pumpenkennlinie 23, 23' an die mittels der Temperaturmesseinrichtung 14 gemessenen Temperaturwerte anpassbar ist.

Ferner weist die Steuer- und Auswerteeinheit 15 eine Alarmfunktion auf, die einen Alarm ausgibt, wenn der mittels der ersten Druckmesseinrichtung 12 gemessene maximale Pumpendruck p'ₘₐₓ einen festgelegten Grenzwert unterschreitet.

In Fig. 2 sind Pumpenkennlinien 23, 23' eines Temperiergeräts 1 dargestellt. Pumpenkennlinie 23 ist die Pumpenkennlinie eines neuen Temperiergeräts 1, Pumpenkennlinie 23' ist die Pumpenkennlinie desselben Temperiergeräts 1 nach einer gewissen Betriebsdauer, nach der sich bereits Verschleißerscheinungen zeigen.

Optional kann das Temperiergerät 1 auch als Druckwassergerät ausgebildet sein. Das Temperiergerät 1 ist dann wie oben beschreiben ausgebildet, allerdings wird in diesem Fall als Temperiermedium 3 ausschließlich Wasser eingesetzt. Das Druckwassergerät kann für Temperaturen bis zu 180°C eingesetzt werden. Um diese Temperaturen mit Wasser als Temperiermedium 3 zu erreichen, muss das Temperiergerät 1 bzw. das gesamte Temperiersystem unter Druck, dem sogenannten Systemdruck, stehen (Prinzip Schnellkochtopf). Der gewünschte Systemdruck, d.h. der Systemdruck-Sollwert, hängt von der Temperatur des Temperiermediums 3 ab. An dem Behälter 2 ist dann eine zweite Druckmesseinrichtung 19 zur Messung des Systemdrucks angebracht. Der Systemdruck ist hier der Druck im Temperiermedium 3 vor der Pumpe 11 des Temperiergeräts 1. Der Pumpendruck, d. h. der durch die Pumpe 11 aufgebaute Druck, zur Ermittlung der Durchflussmenge ist bei Druckwassergeräten der Differenzdruck aus dem mit der ersten Druckmesseinrichtung 12 gemessenen Vorlaufdruck hinter der Pumpe 11 und dem mit der zweiten Druckmesseinrichtung 19 gemessenen Systemdruck.

Im Falle von Druckwassergeräten wird auch der zur Kalibrierung der Pumpenkennlinie 23, 23' benötigte maximale Pumpendruck pₘₐₓ, p'ₘₐₓ ermittelt, indem die Differenz aus dem mit der ersten Druckmesseinrichtung 12 gemessenen Vorlaufdruck bei geschlossener Absperreinrichtung 13 und dem gleichzeitig mit der zweiten Druckmesseinrichtung 19 gemessenen Systemdruck gebildet wird. Dies geschieht vorzugsweise in der Steuer- und Auswerteeinheit 15. Das weitere Kalibrierungsverfahren erfolgt wie oben beschrieben.

Der Systemdruck-Sollwert kann in der Steuer- und Auswerteeinheit 15 eingestellt werden. Es ist aber auch möglich, dass in der Steuer- und Auswerteeinheit 15 eine zweite Kennlinie 24 für das jeweilige Temperiermedium hinterlegt ist, die vorzugsweise der Dampfdruckkurve für das jeweilige Temperiermedium 3 entspricht. Es kann dann der Systemdruck-Sollwert für die mittels der Temperaturmesseinrichtung 14 gemessene Systemtemperatur aus der zweiten Kennlinie 24, die in Fig. 3 dargestellt ist, ermittelt werden. Vorzugsweise wird der Systemdruck-Sollwert ermittelt, indem der aus der zweiten Kennlinie 24 ermittelte Wert mit einem Sicherheitszuschlag beaufschlagt wird. Da der Sollwert für den Systemdruck mithilfe der Dampfdruckkurve ermittelt wird, wird erreicht, dass das Temperiermedium 3 nicht verdampft. Somit wird es vermieden, dass es in dem Kreislauf des Temperiermediums 3 zu Kavitation kommt, die zu Schäden an der Pumpe 11 führen könnte. Dies ist für Druckwassergeräte wichtig, die bei Temperaturen bis etwa 180°C betrieben werden.

Die Steuer- und Auswerteeinheit 15 ist mit dem Befüllventil 17 und dem Ablassventil 18 verbunden und so ausgebildet, das sie bei Abweichungen des gemessenen Systemdrucks vom Sollwert Öffnungs- und Schließbefehle an das Befüllventil 17 bzw. das Ablassventil 18 liefert.

Im Folgenden wird das Verfahren zur Bestimmung der Durchflussmenge in dem Temperiergerät 1 näher beschrieben. Wie bereits beschrieben, ist in der Steuer- und Auswerteeinheit 15 jedes Temperiergeräts 1 eine Pumpenkennlinie 23 hinterlegt, in der der Pumpendruck über der Durchflussmenge des Temperiermediums 3 aufgetragen ist. Mit zunehmendem Pumpendruck nimmt die Durchflussmenge ab.

Im Betrieb der Temperiergeräte 1 erfolgt die Durchflussmessung derart, dass hinter, d.h. stromabwärts, der Pumpe 11 des Temperiergeräts 1 eine erste Druckmesseinrichtung 12 angeordnet ist. Die erste Druckmesseinrichtung 12 ist mit der Steuer- und Auswerteeinheit 15 verbunden und liefert die gemessenen Drucksignale, d.h. den Vorlaufdruck, an die Steuer- und Auswerteeinheit 15. In der Steuer- und Auswerteeinheit 15 werden diese Messwerte mit der hinterlegten Pumpenkennlinie 23, 23' verglichen und so die entsprechende Durchflussmenge des Temperiermediums 3 ermittelt.

Bei Druckwassergeräten wird der zur Bestimmung der Durchflussmenge benötigte Pumpendruck bestimmt, indem der Differenzdruck aus dem mit der ersten Druckmesseinrichtung 12 gemessenen Vorlaufdruck nach der Pumpe 11 und dem mit der zweiten Druckmesseinrichtung 19 im Behälter 2 gemessenen Systemdruck bestimmt und dieser Pumpendruck mit der hinterlegten Pumpenkennlinie 23, 23' verglichen wird. Vorzugsweise wird der Differenzdruck in der Steuer- und Auswerteeinheit 15 berechnet.

Das erfindungsgemäße Durchflussmessverfahren ermöglicht ferner ein Kalibrieren der Pumpenkennlinie 23. Dadurch können Verschleißerscheinungen der Pumpe 11 bei der Durchflussmessung berücksichtigt werden. Hierzu gibt die Steuer- und Auswerteeinheit 15 einen Schließbefehl an die Absperreinrichtung 13. Die Pumpe 11 fördert das Temperiermedium 3 also in eine geschlossene Leitung, so dass mit der ersten Druckmesseinrichtung 12 der maximale Pumpendruck pₘₐₓ, p'ₘₐₓ den die Pumpe 11 bringen kann, ermittelt wird.

Bei Druckwassergeräten erfolgt die Kalibrierung wie oben beschrieben, allerdings wird auch der maximale Pumpendruck pₘₐₓ, p'ₘₐₓ durch die Bildung der Differenz aus dem maximalen Vorlaufdruck bei geschlossener Vorlaufleitung 8, der mit der ersten Druckmesseinrichtung 12 gemessen wird, und dem Systemdruck, der mit der zweiten Druckmesseinrichtung 19 gemessen wird, ermittelt.

Der maximale Pumpendruck pₘₐₓ stellt den Nullpunkt der entsprechenden Pumpenkennlinie 23 dar. Der beim Kalibrieren ermittelte maximale Pumpendruck pₘₐₓ, p'ₘₐₓ wird mit der hinterlegten Pumpenkennlinie 23 verglichen. Wird beim Kalibrieren ein geänderter maximaler Pumpendruck p'ₘₐₓ ermittelt, der nicht mit dem Nullpunkt, d.h. dem maximalen Pumpendruck pₘₐₓ, der hinterlegten Kennlinie 23 entspricht, so wird die Pumpenkennlinie parallel verschoben, bis ihr Ursprung durch den neuen maximalen Pumpendruck p'ₘₐₓ verläuft. Die so ermittelte neu kalibrierte Pumpenkennlinie 23' ermöglicht eine Berücksichtigung von Verschleiß an der Pumpe 11.

Nach der Durchführung des Kalibrierens kann das Temperiergerät 1 normal betrieben werden. Vorzugsweise beträgt die Dauer der Kalibrierung, also die Zeit, während der die Absperreinrichtung 13 geschlossen ist, nur wenige Sekunden. Der Kalibriervorgang erfolgt also sehr schnell, so dass der Betrieb des Temperiergeräts 1 kaum beeinflusst wird. Vorzugsweise erfolgt das Kalibrieren der Pumpenkennlinien 23, 23' in zyklischen Abständen. Dadurch wird sichergestellt, dass der Verschleiß der Pumpe regelmäßig überprüft und berücksichtigt wird, sowie Störungen an der Pumpe festgestellt werden können. Dazu kann in der Steuer- und Auswerteeinheit 15 ein Kalibrierintervall, z.B. in Form von Betriebsstunden, hinterlegt sein. In jedem Fall wird der Kalibrierungsvorgang beim Einschalten des Temperiergeräts 1 durchgeführt. Es besteht ferner die Möglichkeit, die Kalibrierung auch dann durchzuführen, wenn rasche Druckänderungen gemessen werden, die auf einen Schaden an der Pumpe schließen lassen.

In dem Verfahren zur Bestimmung der Durchflussmenge des Temperiermediums 3 kann ferner vorgesehen sein, dass das Temperiergerät 1 einen Alarm ausgibt, wenn der maximale Pumpendruck p'ₘₐₓ einen Grenzwert unterschreitet. Der Benutzer wird damit darauf aufmerksam gemacht, dass die Pumpe 11 bereits stark verschlissen ist und gewartet oder ausgetauscht werden sollte.

Es kann auch vorgesehen werden, dass die gemessenen maximalen Pumpendrücke pₘₐₓ, p'ₘₐₓ gespeichert werden. Somit kann der fortlaufende Verschleiß der Pumpe aufgezeichnet werden.

Bei dem erfindungsgemäßen Durchflussmessverfahren wird die Temperatur des Temperiermediums 3 gemessen und an die Steuer- und Auswerteeinheit 15 übertragen, die die Pumpenkennlinie 23, 23' an die gemessene Temperatur anpasst. Dadurch können temperaturbedingte Dichteschwankungen des Temperiermediums 3 bei der Ermittlung der Durchflussmenge berücksichtigt werden.

Bei Druckwassergeräten ist in der Steuer- und Auswerteeinheit 15 die Dampfdruckkurve 24 des jeweiligen Temperiermediums 3 hinterlegt. Aus dieser Dampfdruckkurve 24 wird der Systemdruck-Sollwert ermittelt. Dazu wird die mittels der Temperaturmesseinrichtung 14 gemessene Temperatur des Temperiermediums 3 mit der Dampfdruckkurve 24 verglichen und so der Systemdruck-Sollwert ermittelt. Vorzugsweise entspricht der Systemdruck-Sollwert dem aus der Dampfdruckkurve ermittelten Sättigungsdampfdruck plus einem Sicherheitszuschlag.

Der Systemdruck von Druckwassergeräten wird durch Befüllen des Temperiergeräts 1 mit Temperiermedium 3 oder durch Ablassen von Temperiermedium 3 aus dem Temperiergerät 1 eingestellt. Liegt der mit der zweiten Druckmesseinrichtung 19 gemessene Systemdruck unter dem Systemdruck-Sollwert, so gibt die Steuer- und Auswerteeinheit 15 einen Öffnungsbefehl an das Befüllventil 17 und Temperiermedium 3 strömt in das Temperiergerät 1 bis der Systemdruck-Sollwert erreicht ist. Um sicherzustellen, dass die Nachfüllung auch bei geringen Drücken im Wassernetz erfolgen kann, kann an den Befüllanschluss 7 eine Befüllpumpe (nicht dargestellt) angeschlossen werden. Dies ist vor allem bei höheren Temperaturen und damit auch höheren Systemdrücken vorteilhaft.

Liegt der gemessene Systemdruck über dem Systemdruck-Sollwert, so gibt die Steuer- und Auswerteeinheit 15 einen Öffnungsbefehl an das Ablassventil 18, bis der Systemdruck dem Systemdruck-Sollwert entspricht.

Mit dem erfindungsgemäßen Temperiergerät ist es auch möglich, das Auftreten von Kavitation zu überwachen. Wie Versuche gezeigt haben, zeigen Druckschwankungen, die beispielsweise mit den Druckmesseinrichtungen 12, 19 gemessen werden, das Auftreten von Kavitation an. Diese Druckschwankungen können dann von der Steuer- und Auswerteeinheit 15 ausgewertet werden, um das Befüllventil 17 zu aktivieren und eine Befüllung des Temperiergeräts 1 mit Temperiermedium 3 zu bewirken.

## Patentansprüche

1. Temperiergerät (1) mit einer Pumpe (11) zur Förderung eines Temperiermediums (3), einer der Pumpe (11) nachgeordneten Druckmesseinrichtung (12), einer der Druckmesseinrichtung (12) nachgeordneten Absperreinrichtung (13) und einer Steuer- und Auswerteeinheit (15), **dadurch gekennzeichnet, dass** in der Steuer- und Auswerteeinheit (15) eine Pumpenkennlinie (23) der Pumpe (11) des Temperiergeräts (1) hinterlegt ist, die eine Beziehung zwischen einem Pumpendruck des Temperiergeräts (1) und einer Durchflussmenge des Temperiermediums (3) wiedergibt, und dass die Steuer- und Auswerteeinheit (15) derart ausgebildet ist, dass die Pumpenkennlinie (23) kalibrierbar ist.

2. Temperiergerät (1) nach Anspruch 1, **dadurch gekennzeichnet, dass** das Temperiergerät (1) ferner eine zweite, der Pumpe (11) vorgeschaltete Druckmesseinrichtung (19) zur Bestimmung eines Systemdrucks umfasst.

3. Temperiergerät (1) nach Anspruch 1 oder 2, **dadurch gekennzeichnet, dass** die Steuer- und Auswerteeinheit (15) derart ausgebildet ist, dass sie bei der Kalibrierung der Pumpenkennlinie (23) ein Schließen der Absperreinrichtung (13) bewirkt, so dass ein maximaler Pumpendruck (pₘₐₓ, p'ₘₐₓ) ermittelbar ist, der den Nullpunkt der Pumpenkennlinie (23, 23') festlegt.

4. Temperiergerät (1) nach einem der Ansprüche 1 bis 3, **dadurch gekennzeichnet, dass** das Temperiergerät (1) eine Temperaturmesseinrichtung (14) aufweist, und die Steuer- und Auswerteeinheit (15) derart ausgebildet ist, dass die Pumpenkennlinie (23) an die gemessenen Temperaturwerte anpassbar ist.

5. Temperiergerät (1) nach einem der Ansprüche 1 bis 4, **dadurch gekennzeichnet, dass** das Temperiergerät (1) einen Befüllanschluss (7, 17) zum Befüllen mit Temperiermedium (3) und einen Ablassanschluss (22, 18, 21) zum Ablassen von Temperiermedium (3) aufweist, und dass die Steuer- und Auswerteeinheit (15) derart ausgebildet ist, dass der Systemdruck vor der Pumpe (11) des Temperiergeräts (1) durch Ansteuern des Befüllanschlusses (7, 17) oder des Ablassanschlusses (18, 21) einstellbar ist.

6. Temperiergerät (1) nach Anspruch 5, **dadurch gekennzeichnet, dass** in der Steuer-und Auswerteeinheit (15) ferner eine zweite Kennlinie (24) für das jeweilige Temperiermedium (3) hinterlegt ist und ein Systemdruck-Sollwert anhand der mittels der Temperaturmesseinrichtung (14) gemessenen Systemtemperatur aus der zweiten Kennlinie (24) bestimmbar ist.

7. Verfahren zum Bestimmen der Durchflussmenge eines Temperiermediums (3) in einem Temperiergerät (1) nach einem der vorangehenden Ansprüche, bei welchem der Vorlaufdruck des Temperiermediums (3) nach der Pumpe (11) gemessen wird, **dadurch gekennzeichnet, dass** aus dem Vorlaufdruck der Pumpendruck ermittelt, der Pumpendruck mit der in der Steuer- und Auswerteeinheit (15) des Temperiergeräts (1) hinterlegten Pumpenkennlinie (23), die die Beziehung zwischen dem Pumpendruck des Temperiergeräts (1) und einer Durchflussmenge des Temperiermediums (3) wiedergibt, verglichen und die korrespondierende Durchflussmenge des Temperiermediums (3) ermittelt wird, wobei die Pumpenkennlinie (23) zumindest einmal kalibriert wird.

8. Verfahren nach Anspruch 7, **dadurch gekennzeichnet, dass** die Absperreinrichtung (13) des Temperiergeräts (1) zum Kalibrieren kurzzeitig geschlossen, ein maximaler Pumpendruck (pₘₐₓ, p'ₘₐₓ) ermittelt und die in der Steuer- und Auswerteeinheit (15) hinterlegte Pumpenkennlinie (23) an den maximalen Pumpendruck (pₘₐₓ, p'ₘₐₓ) angepasst wird.

9. Verfahren nach Anspruch 7, **dadurch gekennzeichnet, dass** der maximale Pumpendruck (pₘₐₓ, p'ₘₐₓ) den Nullpunkt der Pumpenkennlinie (23, 23') festlegt und die Pumpenkennlinie (23) bei einer Änderung des maximalen Pumpendrucks (pₘₐₓ, p'ₘₐₓ) durch Parallelverschiebung in den neuen Nullpunkt verschoben wird.

10. Verfahren nach einem der Ansprüche 7 bis 9, **dadurch gekennzeichnet, dass** zusätzlich der Systemdruck des Temperiermediums (3) vor der Pumpe (11) ermittelt wird, ein Differenzdruck aus den Messwerten für den Vorlaufdruck des Temperiermediums (3) nach der Pumpe (11) und den Systemdruck des Temperiermediums (3) vor der Pumpe ermittelt wird, wobei der Differenzdruck dem Pumpendruck entspricht, mit der in der Steuer- und Auswerteeinheit hinterlegten Pumpenkennlinie (23) verglichen und die korrespondierende Durchflussmenge ermittelt wird.

11. Verfahren nach einem der Ansprüche 8 bis 10, **dadurch gekennzeichnet, dass** die maximalen Pumpendrücke (pₘₐₓ, p'ₘₐₓ) gespeichert werden.

12. Verfahren nach einem der Ansprüche 7 bis 11, **dadurch gekennzeichnet, dass** der Kalibrierungsvorgang bei jedem Einschalten des Temperiergeräts (1) durchgeführt wird.

13. Verfahren nach einem der Ansprüche 7 bis 12, **dadurch gekennzeichnet, dass** die Temperatur des Temperiermediums (3) gemessen und die Pumpenkennlinie (23, 23') an die gemessene Temperatur angepasst wird.

14. Verfahren nach einem der Ansprüche 10 bis 13, **dadurch gekennzeichnet, dass** der Systemdruck ferner mit einem Sollwert verglichen wird und die Steuer- und Auswerteeinheit (15) den Befüllanschluss (7, 17) oder den Ablassanschluss (18; 21) bei Abweichungen des Systemdrucks von dem Sollwert öffnet.

15. Verfahren nach Anspruch 14, **dadurch gekennzeichnet, dass** in der Steuer- und Auswerteeinheit (15) die Dampfdruckkurve des jeweiligen Temperiermediums (3) hinterlegt ist und der Systemdruck-Sollwert anhand der gemessenen Systemtemperatur aus der Dampfdruckkurve (24) ermittelt wird.

## Claims

1. Temperature control device (1) with a pump (11) for conveying a heating medium (3), a pressure measuring device (12) disposed downstream of the pump (11), a shut-off device (13) disposed downstream of the pressure measuring device (12) and a control and evaluation unit (15), **characterised in that** a pump characteristic curve (23) of the pump (11) of the temperature control device (1) representing a relationship between a pump pressure of the temperature control device (1) and a flow rate of the heating medium (3) is stored in the control and evaluation unit (15), and the control and evaluation unit (15) is configured so that the pump characteristic curve (23) can be calibrated.

2. Temperature control device (1) according to claim 1, **characterised in that** the temperature control device (1) further comprises a second pressure measuring device (19) disposed upstream of the pump (11) for determining a system pressure.

3. Temperature control device (1) according to claim 1 or 2, **characterised in that** the control and evaluation unit (15) is configured so that it causes the shut-off device (13) to be closed during calibration of the pump characteristic curve (23) so that a maximum pump pressure (pₘₐₓ, p'ₘₐₓ) can be determined which sets the zero point of the pump characteristic curve (23, 23').

4. Temperature control device (1) according to any one of claims 1 to 3, **characterised in that** the temperature control device (1) has a temperature measuring device (14) and the control and evaluation unit (15) is configured to enable the pump characteristic curve (23) to be adapted to the measured temperature values.

5. Temperature control device (1) according to any one of claims 1 to 4, **characterised in that** the temperature control device (1) has a filling connector (7, 17) for filling with heating medium (3) and an outlet connector (22, 18, 21) for discharging heating medium (3), and the control and evaluation unit (15) is configured to enable the system pressure upstream of the pump (11) of the temperature control device (1) to be adjusted by activating the filling connector (7, 17) or the outlet connector (18, 21).

6. Temperature control device (1) according to claim 5, **characterised in that** a second characteristic curve (24) for the respective heating medium (3) is also stored in the control and evaluation unit (15), and a desired system pressure value can be determined from the second characteristic curve (24) using the system temperature measured by means of the temperature measuring device (14).

7. Method of determining the flow rate of a heating medium (3) in a temperature control device (1) according to any one of the preceding claims, whereby the initial pressure of the heating medium (3) downstream of the pump (11) is measured, **characterised in that** the pump pressure is determined from the initial pressure, the pump pressure is compared with the pump characteristic curve (23) representing the relationship between the pump pressure of the temperature control device (1) and a flow rate of the heating medium (3) stored in the control and evaluation unit (15) of the temperature control device (1), and the corresponding flow rate of the heating medium (3) is determined, and the pump characteristic curve (23) is calibrated at least once.

8. Method according to claim 7, **characterised in that** the shut-off device (13) of the temperature control device (1) is closed for a short period for the calibration, a maximum pump pressure (pₘₐₓ, p'ₘₐₓ) is determined and the pump characteristic curve (23) stored in the control and evaluation unit (15) is adapted to the maximum pump pressure (pₘₐₓ, p'ₘₐₓ).

9. Method according to claim 7, **characterised in that** the maximum pump pressure (pₘₐₓ, p'ₘₐₓ) sets the zero point of the pump characteristic curve (23, 23') and when there is a change in the maximum pump pressure (pₘₐₓ, p'ₘₐₓ), the pump characteristic curve (23) is shifted to the new zero point by a parallel shift.

10. Method according to any one of claims 7 to 9, **characterised in that**, in addition, the system pressure of the heating medium (3) upstream of the pump (11) is determined, a differential pressure is determined from the measurement values for the initial pressure of the heating medium (3) downstream of the pump (11) and the system pressure of the heating medium (3) upstream of the pump, the differential pressure corresponding to the pump pressure is compared with the pump characteristic curve (23) stored in the control and evaluation unit, and the corresponding flow rate is determined.

11. Method according to any one of claims 8 to 10, **characterised in that** the maximum pump pressures (pₘₐₓ, p'ₘₐₓ) is are stored.

12. Method according to any one of claims 7 to 11, **characterised in that** the calibration process is run every time the temperature control device (1) is switched on.

13. Method according to any one of claims 7 to 12, **characterised in that** the temperature of the heating medium (3) is measured and the pump characteristic curve (23, 23') is adapted to the measured temperature.

14. Method according to any one of claims 10 to 13, **characterised in that** the system pressure is also compared with a desired value and the control and evaluation unit (15) opens the filling connector (7, 17) or the outlet connector (18; 21) whenever the system pressure deviates from the desired value.

15. Method according to claim 14, **characterised in that** the vapour pressure diagram of the respective heating medium (3) is stored in the control and evaluation unit (15) and the desired system pressure value is determined from the vapour pressure diagram (24) using the measured system temperature.

## Revendications

1. Appareil de régulation de température (1) comprenant une pompe (11) pour alimenter un fluide de régulation de température (3), un dispositif de mesure de pression (12) associé àdisposé en aval de la pompe (11), un dispositif de coupure (13) associé audisposé en aval du dispositif de mesure de pression (12), et une unité de commande et d'évaluation (15), **caractérisé en ce qu'**une courbe caractéristique (23) de la pompe (11) de l'appareil de régulation de température (1) est consignée dans l'unité de commande et d'évaluation (15), qui représente une relation entre une pression de pompe de l'appareil de régulation de température (1) et un débit du fluide de régulation de température (3), et **en ce que** l'unité de commande et d'évaluation (15) est constituée de telle sorte que la courbe caractéristique (23) de la pompe peut être étalonnée.

2. Appareil de régulation de température (1) selon la revendication 1, **caractérisé en ce que** l'appareil de régulation de température (1) comprend en outre un deuxième dispositif de mesure de pression (19) en amont de la pompe (11) pour établir une pression du système.

3. Appareil de régulation de température (1) selon la revendication 1 ou 2, **caractérisé en ce que** l'unité de commande et d'évaluation (15) est constituée de telle sorte qu'elle commande une fermeture du dispositif de coupure (13) lors de l'étalonnage de la courbe caractéristique de la pompe (23), de manière à pouvoir déterminer une pression de pompe maximale (Pₘₐₓ, P'ₘₐₓ) qui établit le point zéro de la courbe caractéristique (23, 23') de la pompe.

4. Appareil de régulation de température (1) selon l'une des revendications 1 à 3, **caractérisé en ce que** l'appareil de régulation de température (1) comporte un dispositif de mesure de température (14), et **en ce que** l'unité de commande et d'évaluation (15) est constituée de telle façon que la courbe caractéristique (23) de la pompe peut être adaptée en fonction de la valeur de température mesurée.

5. Appareil de régulation de température (1) selon l'une des revendications 1 à 4, **caractérisé en ce que** l'appareil de régulation de température (1) comporte une connexion de remplissage (7, 17) pour un remplissage du fluide de régulation de température (3), ainsi qu'une connexion de vidange (22, 18, 21) pour une vidange du fluide de régulation de température (3), et **en ce que** l'unité de commande et d'évaluation (15) est constituée de telle sorte que la pression du système avant la pompe (11) de l'appareil de régulation de température (1) est réglable en commandant la connexion de remplissage (7, 17) ou la connexion de vidange (18, 21).

6. Appareil de régulation de température (1) selon la revendication 5, **caractérisé en ce qu'**une deuxième courbe caractéristique (24) pour le fluide de régulation de température respectif (3) est en outre consignée dans l'unité de commande et d'évaluation (15) et **en ce qu'**une valeur de consigne de la pression du système peut être déterminée à l'aide de la température du système mesurée par le dispositif de mesure de température (14) à partir de la deuxième courbe caractéristique (24).

7. Procédé de détermination du débit d'un fluide de régulation de température (3) dans un appareil de régulation de température (1) selon l'une des revendications précédentes, dans lequel la pression amont du fluide de régulation de température (3) est mesurée après la pompe (11), **caractérisé en ce que** la pression de pompe est déterminée à partir de la pression amont, la pression de pompe est comparée à la courbe caractéristique (23) de la pompe consignée dans l'unité de commande et d'évaluation (15) de l'appareil de régulation de température (1), qui représente la relation entre la pression de la pompe de l'appareil de régulation de température (1) et un débit du fluide de régulation de température (3), et le débit correspondant du fluide de régulation de température (3) est déterminé, dans lequel la courbe caractéristique de la pompe (23) est étalonnée au moins une fois.

8. Procédé selon la revendication 7, **caractérisé en ce que** le dispositif de coupure (13) de l'appareil de régulation de température (1) est fermé durant une courte période pour l'étalonnage, une pression de pompe maximale (Pₘₐₓ, P'ₘₐₓ) est déterminée, et la courbe caractéristique (23) de la pompe consignée dans l'unité de commande et d'évaluation (15) est adaptée selon la pression de pompe maximale (P_{max,} P'ₘₐₓ).

9. Procédé selon la revendication 7, **caractérisé en ce que** la pression de pompe maximale (Pₘₐₓ, P'ₘₐₓ) établit le point zéro de la courbe caractéristique (23, 23') de la pompe, et la courbe caractéristique (23) de la pompe est décalée lors d'une modification de la pression de pompe maximale (Pₘₐₓ, P'ₘₐₓ) par une translation parallèle jusqu'au nouveau point zéro.

10. Procédé selon l'une des revendications 7 à 9, **caractérisé en ce que** la pression du système du fluide de régulation de température (3) est en outre déterminée avant la pompe (11), une pression différentielle est déterminée à partir des valeurs de mesure de la pression amont du fluide de régulation de température (3) après la pompe (11) et de la pression du système du fluide de régulation de température (3) avant la pompe, dans lequel la pression différentielle correspond à la pression de la pompe, et est comparée à la courbe caractéristique (23) de la pompe consignée dans l'unité de commande et d'évaluation, et le débit correspondant est déterminé.

11. Procédé selon l'une des revendications 8 à 10, **caractérisé en ce que** les pressions de pompe maximales (Pₘₐₓ, P'ₘₐₓ) sont sauvegardées.

12. Procédé selon l'une des revendications 7 à 11, **caractérisé en ce que** la procédure d'étalonnage est effectuée lors de chaque mise en marche de l'appareil de régulation de température (1).

13. Procédé selon l'une des revendications 7 à 12, **caractérisé en ce que** la température du fluide de régulation de température (3) est mesurée et la courbe caractéristique (23, 23') de la pompe est adaptée en fonction de la température mesurée.

14. Procédé selon l'une des revendications 10 à 13, **caractérisé en ce que** la pression du système est en outre comparée à une valeur de consigne, et l'unité de commande et d'évaluation (15) ouvre la connexion de remplissage (7, 17) ou la connexion de vidange (18, 21) lors de déviations de la pression du système par rapport à la valeur de consigne.

15. Procédé selon la revendication 14, **caractérisé en ce que** la courbe de pression de vapeur du fluide de régulation de température (3) respectif est consignée dans l'unité de commande et d'évaluation (15), et la valeur de consigne de la pression du système est déterminée à l'aide de la température mesurée du système à partir de la courbe de pression de vapeur (24).
